# EUROPÄISCHE PATENTSCHRIFT

(11) **EP 0 911 790 B1**
(45) Veröffentlichungstag und Bekanntmachung des Hinweises auf die Patenterteilung: **13.08.2003**
(21) Anmeldenummer: 98119444.2
(22) Anmeldetag: 15.10.1998
(51) Int. Cl.: G09F 7/02, A62B 3/00

(54) **Feuersicheres Kennzeichnungsschild mit auswechselbaren Zeichen**
Fire resistant sign plate with interchangable characters
Plaque d'identification résistante au feu avec des caractères interchangeables

(30) Priorität: 18.10.1997 DE 29718560 U
(43) Veröffentlichungstag der Anmeldung: 28.04.1999
(73) Patentinhaber: MAZON b.v., 6422 PE Heerlen (NL)
(72) Erfinder: Conrad, Mechthild, 57627 Hachenburg (DE); Strunk, Hans-Ulrich, 57627 Hachenburg (DE); Weber, Edgar, 57645 Nister (DE)
(74) Vertreter: Kohlmann, Kai, Dipl.-Ing.

(56) Entgegenhaltungen:
- EP-A- 0 292 753
- DE-U- 7 437 292
- DE-U- 29 510 156
- US-A- 5 351 813

## Beschreibung

Solche Kennzeichnungsschilder werden z.B. eingesetzt zur Kennzeichnung von Gefahrguttransporten gem. den gesetzlichen Regelungen des ADR.

Die Regelungen des ADR sehen vor, daß für sogenannte kennzeichnungspflichtige Gefahrstoffe Kennzeichnungen an den Fahrzeugen in der Art erfolgen müssen, daß die Gefahrnummer und die Stoffnummer des Gefahrstoffes nach gesetzlicher Vorschrift außen am Fahrzeug kenntlich gemacht werden müssen (sogenannte Warntafeln). Diese Kennzeichnungsnummern müssen unauslöschbar und nach einem Brand von 15 Minuten Dauer noch lesbar sein.

In der Praxis bekannt und durch Gebrauchsmuster sowie eine Patentschrift hinterlegt, sind hierzu Ausführungen, wo Warntafeln Einschiebrahmen haben, in welche einzelne Zeichen eingeschoben werden können, welche meist erhaben geprägt sind.
GM DE 74 37 292
EP 0 292 753 B1

Die Reihenfolge der in waagrechter Anordnung eingeschobenen Zeichen ergibt dann jeweils im oberen Rahmen die Gefahrnummer und in dem darunterliegenden Rahmen die Stoffnummer.

Diese Warntafeln werden eingesetzt zur Kennzeichnung von Fahrzeugen, welche häufig unterschiedliche Gefahrstoffe transportieren, z.B. Chemietransporte. Hierbei wird jedoch ein gewisser Vorrat an Zeichen benötigt (mindestens 29 Stück), welcher ebenfalls mitgeführt werden muß, damit die Wechselmöglichkeit gegeben ist. Dieser Zeichenvorrat muß bei den derzeitigen Warntafeln im Führerhaus oder an anderer geeigneter Stelle aufbewahrt werden, da die bisher auf dem Markt befindlichen Warntafeln hierzu keine Möglichkeit vorsehen.

Weiterhin schreibt der Gesetzgeber vor, daß die Warntafeln abgedeckt oder entfernt werden müssen, wenn das Fahrzeug kein Gefahrgut geladen hat. Dies geschieht in der Praxis dadurch, daß Überzugshauben oder Abdeckbleche im Fahrerhaus oder an einer anderen geeigneten Stelle mitgeführt werden.

Allgemein haftet den im Verkehr befindlichen Warntafeln mit geprägten Zeichen der Mangel an, daß diese geprägten Zeichen nach einem Brand von 15 Minuten Dauer unlesbar oder nur sehr schlecht lesbar sind. Dies haben Versuche bei großen Chemieunternehmen bzw. der BAM gezeigt.

Der im Patentanspruch 1 angegebenen Erfindung liegt das Problem zugrunde, eine Warntafel oder allgemein ein feuersicheres Kennzeichnungsschild mit auswechselbaren Zeichen zu schaffen, wobei der notwendige Zeichenvorrat zur Bildung von Gefahr- und Stoffnummer nicht mehr im Fahrerhaus mitgeführt werden muß, sondern direkt an der Warntafel vorhanden ist und auch eine Überzugshaube oder ein Abdeckblech nicht mehr im Fahrerhaus mitgeführt werden müssen durch entsprechende Ausgestaltung des Kennzeichnungsschildes. Darüberhinaus soll eine erheblich verbesserte Lesbarkeit während und nach einem Brand im Verhältnis zu den fast ausschließlich bisher eingesetzten geprägten Einzelzeichen erreicht werden.

Dieses Problem wird mit den im Patentanspruch 1 aufgeführten Merkmalen gelöst.
Die einzelnen Zeichen sind in einem Kasten enthalten, welcher im Inneren des Kennzeichnungsschildes angebracht ist.
Das Wechseln der Zeichen geschieht nun in der Art, daß die Schildkonstruktion geöffnet wird, indem die seitlichen Verschlußschrauben gelöst werden und die abgekantete Blechplatte mit der orangefarbenen Deckplatte und den Kennzeichnungsnummern nach links geklappt wird.
Da die Kennzeichnungsnummern (Gefahr- und Stoffnummer) erfindungsgemäß gebildet werden aus einzelnen aufgehängten Zeichen, können diese nunmehr einfach gegen die Zeichen aus dem Zeichenvorrat ausgetauscht werden.

Nach dem Wechselvorgang wird die Schildkonstruktion wieder geschlossen. Hierbei hindern die Arretierungslaschen, welche im Innern des Blechkastens angebracht sind, die einzelnen aufgehängten Zeichen am Auswandern, was durch Erschütterungen während der Fahrt eintreten könnte.

Die orangefarbene Deckplatte kann abgenommen und mit der neutralen Rückseite nach vorne wieder befestigt werden, falls kein Gefahrgut geladen ist.

Hierzu müssen jedoch die Zeichen, welche die Gefahr- und Stoffnummer bilden, zunächst abgehängt und zum Zeichenvorrat in den Blechkasten verbracht werden.

Die Lesbarkeit der Gefahr- und Stoffnummern ist bei den ausdekupierten aufgehängten Zeichen erfahrungsgemäß wesentlich besser als bei geprägten Zeichen, insbesondere dann, wenn diese ausdekupierten Zeichen aus Edelstahl bestehen und als Hintergrund der Zeichen eine sendzimierverzinkte Stahlplatte verwendet wird und die Zeichen zusätzlich mit Abstand vor der Schildplatte stehen. Die erheblich verbesserte Lesbarkeit ist durch Brandversuche unterlegt.

Mit der Erfindung wird somit erreicht, daß die Handhabung eines solchen Kennzeichnungsschildes mit auswechselbaren Zeichen wesentlich besser ist, als bei den bisherigen Ausführungen, wo der Zeichenvorrat im Führerhaus mitgeführt werden mußte. Dies liegt vor allem daran, daß die entsprechenden Fahrzeuge bis zu 18 solcher Warntafeln haben müssen und der Mindestzeichenvorrat je Tafel 29 beträgt. Darüberhinaus gehen sehr oft Zeichen verloren.

Mit der Erfindung wird außerdem erreicht, daß die Kosten für Überzugshauben und Abdeckbleche entfallen. Diese Teile brauchen nicht mehr im Fahrerhaus mitgeführt zu werden, können somit nicht verloren gehen und auch nicht zweckentfremdet verwendet werden (z.B. Überzugshauben als Putzlappen).

Mit der Erfindung wird eine dauerhafte Kennzeichnung von Gefahrguttransporten vor, während und nach einem Brand erreicht.

Eine weitere vorteilhafte Ausgestaltung der Erfindung ist darin zu sehen, daß solche feuersicheren Kennzeichnungsschilder mit auswechselbaren Zeichen nicht nur zur Kennzeichnung von Gefahrguttransporten Verwendung finden können, sondern auch in anderen Bereichen der Industrie mit ähnlich Rahmenbedingungen.

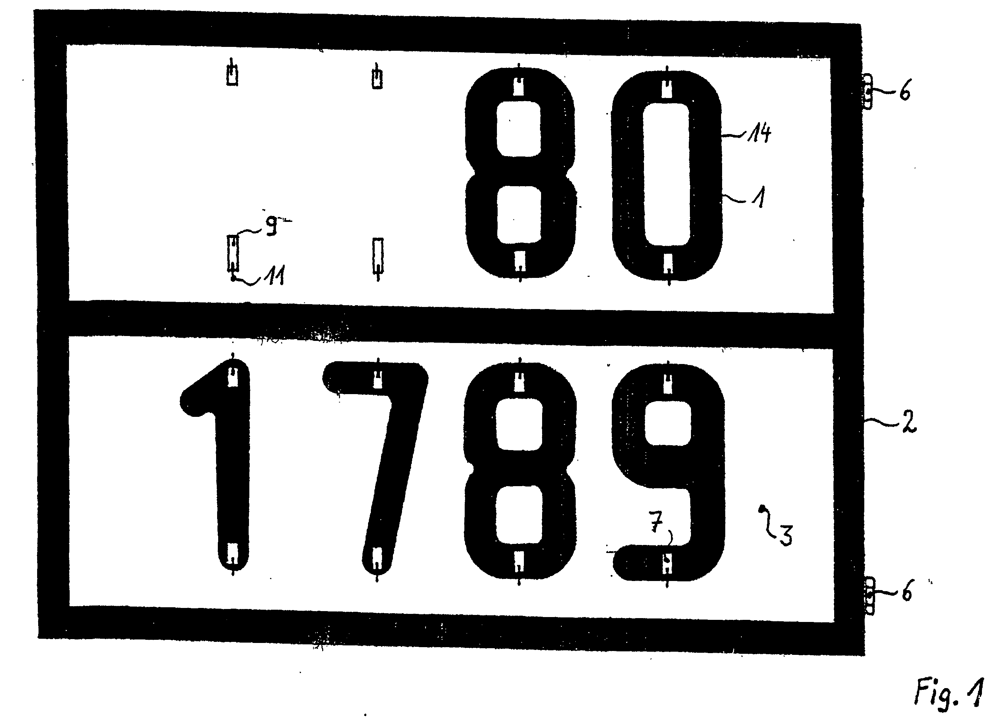

Ein Ausführungsbeispiel der Erfindung wird anhand der Figur 1 bis Figur 3 erläutert.

Es zeigen:
- Fig. 1 :: die Vorderansicht des Schildes bei geschlossener Schildkonstruktion mit der Gefahr- und Stoffnummer, welche gebildet sind aus einzelnen aufgehängten Ziffern (1). Weiterhin sind die Verschlußschrauben (6) zu sehen mit dem die abklappbare Blechplatte (2) im dahinterliegenden Blechkasten (4) arretiert wird. Ebenfalls sichtbar ist die Deckplatte (3), welche vor der abgekanteten Blechplatte (2) aufgehängt ist.

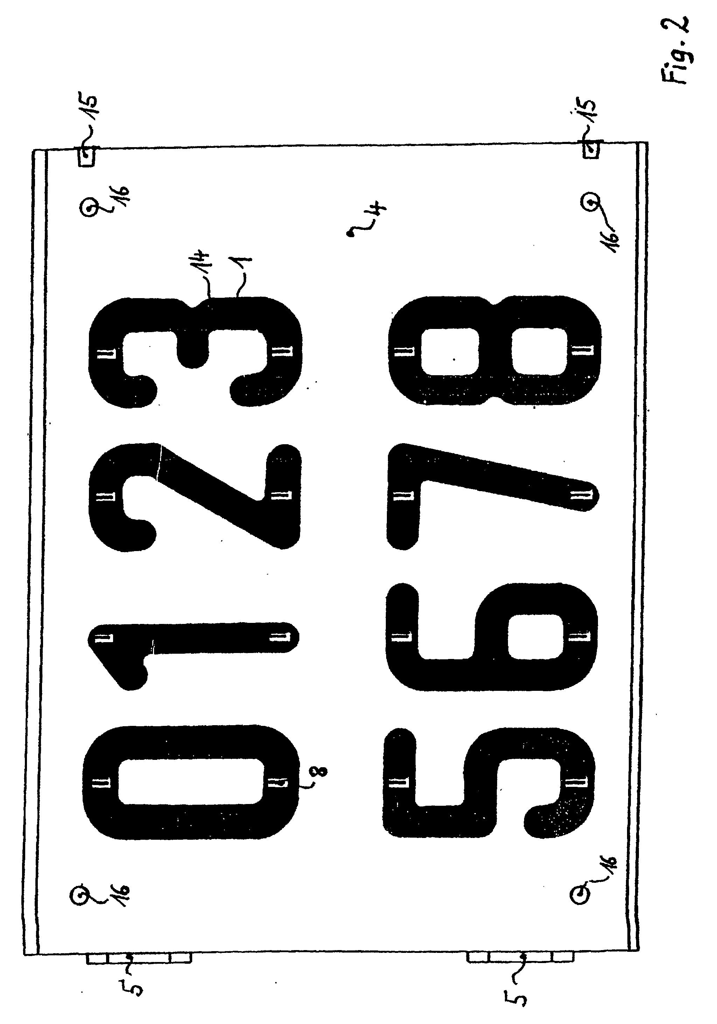

- Fig. 2 :: die Ansicht des Schildes bei geöffneter Schildkonstruktion. Man erkennt den Zeichenvorrat (1), welcher aus einzelnen Zeichen (1) besteht, die auf die Arretierungslaschen (8) aufgeschoben sind. Ebenfalls sichtbar sind links die Scharniere (5), an welchen die abgekantete Blechplatte (2) befestigt ist. Man erkennt rechts die Einziehmuttern (15) über welche die abgekantete Blechplatte (2) mit Verschlußschrauben (6) im Blechkasten (4) arretiert wird. Die vier Montagebohrungen (16) dienen zur Befestigung der Schildkonstruktion am Fahrzeug/Untergrund.

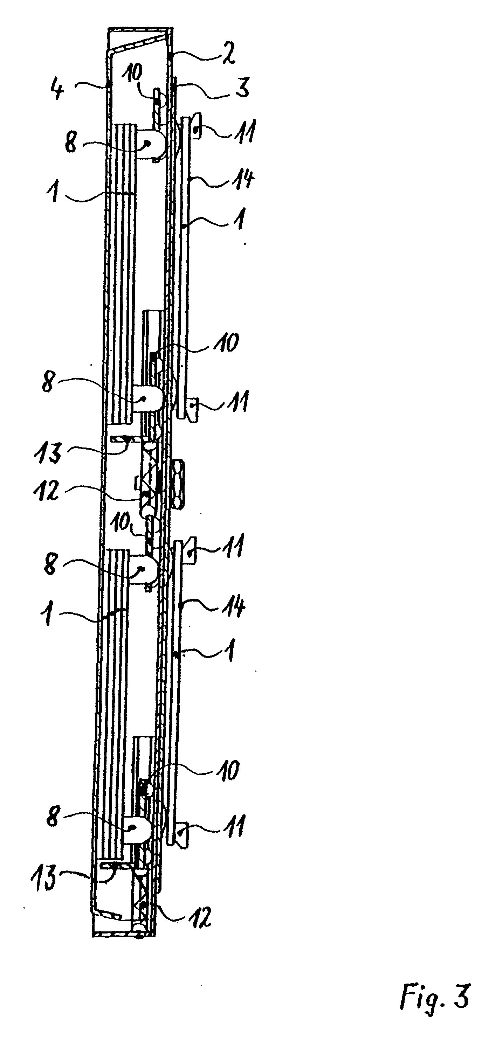

- Fig. 3 :: einen Vertikalschnitt durch die Schildkonstruktion. Man erkennt rechts die aufgehängten Zeichen (1), dahinter die Deckplatte (3), welche vor der abgekanteten Blechplatte (2) angeordnet ist, die ihrerseits den Blechkasten (4) abdeckt. Im Blechkasten (4) befinden sich der Zeichenvorrat (1), sowie die Aufhängevorrichtungen (10) für die Zeichen (1) und die Arretierungslaschen (8), sowie die Zugfedern (12), welche die aufgehängten Zeichen (1) verspannen.

Figur 1 bis Figur 3 zeigen das feuersichere Kennzeichnungsschild, wobei in Figur 1 eine Gefahrnummer ( in der oberen Schildhälfte) und eine Stoffnummer (in der unteren Schildhälfte) beispielhaft dargestellt sind. Gefahr- und Stoffnummer werden hierbei gebildet durch einzelne ausdekupierte Ziffern (1), welche über Aufhängekrallen (11) vor der Deckplatte (3) verspannt sind. Die Deckplatte (3) ihrerseits ist vor der abgekanteten Blechplatte (2) aufgehängt. Diese abgekantete Blechplatte (2) hat links innenliegende Scharniere (5), über welche die Schildkonstruktion geöffnet werden kann. Rechts sind die entsprechenden Verschlußschrauben (6) sichtbar, über welche die abgekantete Blechplatte (2) im Blechkasten (4) arretiert werden kann.

Figur 2 zeigt, daß bei geöffneter Schildkonstruktion der Zeichenvorrat (1) sehr gut zugänglich ist, da die einzelnen Zeichen (1) ldgl. auf die Arretierungslaschen (8) aufgeschoben sind und hierbei untereinander einen solchen Abstand haben, daß die Zeichen (1) auch im Winter problemlos mit Handschuhen entnommen werden können.

Das Wechseln der Gefahr- und/oder Stoffnummer geschieht nun dadurch, daß die Schildkonstruktion zunächst geöffnet wird und die abgekantete Blechplatte (2), welche die Deckplatte (3) und die Zeichen (1) zur Bildung der Gefahr- und Stoffnummer trägt nach links weggeklappt wird. Hierdurch werden die Aufhängevorrichtungen (10) an der Rückseite der abgekanteten Blechplatte (2) zugänglich. Durch Hochschieben der jeweils unteren Aufhängevorrichtungen (10) wird die Feder (12) entspannt und das zu wechselnde Zeichen (1) kann abgehängt werden.
Aus dem Zeichenvorrat (1), welcher durch das Öffnen der Schildkonstruktion ebenfalls zugänglich wurde, kann nun das gewünschte Zeichen (1) entnommen werden und bei hochgedrückter Aufhängevorrichtung (10) wieder aufgehängt werden.

Das nicht mehr benötigte Zeichen (1) wird in den Zeichenvorrat (1) verbracht.

Nach dem Loslassen der Aufhängevorrichtung (10) verspannt die Feder (12) wieder alle entsprechenden Zeichen (1) der Gefahr- bzw. Stoffnummer.

Beim Schließen der Schildkonstruktion greifen die Arretierungslaschen (8) durch entsprechende Öffnungen in der Aufhängevorrichtung (10), sodaß die Zeichen (1) gegen Auswandern gesichert sind, da die untere höhenbewegliche Aufhängevorrichtung (10) arretiert wird.

Da der Zeichenvorrat (1) ebenfalls auf diesen Arretierungslaschen (8) aufgehängt ist, ist sichergestellt, daß sich die Zeichen (1) immer geordnet im Innern des Blechkastens (4) befinden.

Sollte das betreffende Fahrzeug kein Gefahrgut geladen haben und die entsprechenden Transporteinheiten leer und gereinigt sein, so müssen sämtliche außen befindlichen Zeichen (1) abgehängt werden.
Dann wird die Deckplatte (3) abgenommen und mit ihrer Rückseite nach vorne wieder aufgehängt.

Da die Rückseite der Deckplatte (3) eine neutrale Farbgebung hat und keine Zeichen (1) mehr auf der Vorderseite des Schildes sichtbar sind, wird die vom Gesetzgeber in diesem Fall vorgeschriebene Bedingung hundertprozentig erfüllt.

## Patentansprüche

1. Feuersicheres Kennzeichnungsschild mit auswechselbaren Zeichen, wobei die einzelnen Zeichen (Ziffern, Buchstaben, Sonderzeichen) wiederabnehmbar in einer rechteckigen Blechplatte aus hochtemperaturbeständigem Material gehalten sind, die ihrerseits hochtemperaturbeständig senkrecht mit dem entsprechenden Montageuntergrund (z.B. einem Fahrzeug) dauerhaft fest verbunden ist,
**dadurch gekennzeichnet,**
**daß** ausdekupierte Zeichen (1) aus hochtemperaturbeständigem Material verwendet werden, welche vorne an der Schildkonstruktion über eine Aufhängevorrichtung (10) aufgehängt sind, ein Vorrat an ausdekupierten Zeichen (1) im Innern der Schildkonstruktion mitgeführt werden kann, vorne an der Schildkonstruktion eine Deckplatte (3) vorhanden ist und daß die Schildkonstruktion aus einem Blechkasten (4) besteht, welcher den Zeichenvorrat (1) beinhaltet, wobei dieser Blechkasten (4) vorderseitig über eine allseitig abgekantete Blechplatte (2) abgedeckt wird.

2. Kennzeichnungsschild wie unter Schutzanspruch 1 beschrieben,
**dadurch gekennzeichnet,**
**daß** die Zeichen (1) jeweils oben und unten kleine, hochformatige, rechteckige Durchbrüche (7) haben, über welche die Zeichen (1) aufgehängt werden können.

3. Kennzeichnungsschild wie unter Schutzanspruch 1 beschrieben,
**dadurch gekennzeichnet,**
**daß** die Deckplatte (3) zum Einen den organgefarbenen Hintergrund für die Kennzeichnungsnummer bildet und zum Anderen als neutrale Platte ohne orangefarbene Fläche verwendet werden kann, indem diese Deckplatte (3) abgenommen und mit der Rückseite nach vorne wieder aufgehängt wird, wobei die Deckplatte (3) generell hochtemperaturbeständig mit der Blechplatte (2) verbunden ist.

4. Kennzeichnungsschild wie unter Schutzanspruch 1 beschrieben,
**dadurch gekennzeichnet,**
**daß** die abgekantete Blechplatte (2) an ihrer linken Seite über Scharniere (5) mit dem Blechkasten (4) verbunden ist und an ihrer rechten Seite über zwei Verschlußschrauben (6) im Blechkasten (4) arretiert werden kann, mit der Maßgabe, daß der Blechkasten (4) selbst auf dem Montageuntergrund so befestigt wird, daß die gesamte Schildkonstruktion über die abklappbare Blechplatte (2) geöffnet werden kann.

5. Kennzeichnungsschild wie unter Schutzanspruch 1 beschrieben,
**dadurch gekennzeichnet,**
**daß** der Blechkasten (4) rechtwinklig nach innen ausgestanzte Arretierungslaschen (8) enthält, die so ausgebildet und angeordnet sind, daß sie zum Einen die eingehängten Zeichen (1), welche die Gefahr- und Stoffnummer bilden, bei geschlossener Schildkonstruktion am Auswandern hindern und zum Anderen als Haltearme dienen, auf welche die Zeichen (1) des Zeichenvorrates (1) aufgeschoben werden können.

6. Kennzeichnungsschild wie unter Schutzanspruch 1 beschrieben,
**dadurch gekennzeichnet,**
**daß** die abgekantete Blechplatte (2) an ihrer Vorderseite hochformatige, rechteckige Durchbrüche (9) hat.

7. Kennzeichnungsschild wie unter Schutzanspruch 1 beschrieben,
**dadurch gekennzeichnet,**
**daß** die Aufhängevorrichtungen (10) aus Blechstreifen bestehen, welche rechtwinklig nach vorne ausgestanzte Aufhängekrallen (11) haben, die durch die Blechplatte (2) nach außen geführt werden, wobei jedes Zeichen (1) oben und unten über eine Aufhängekralle (11) gehalten ist, dergestalt, daß die Aufhängekralle (11) am oberen Ende des Zeichens (1) nach oben zeigt und der entsprechende Blechstreifen mit der Rückseite der Blechplatte (2) fest verbunden ist, während die Aufhängekralle (11) am unteren Ende des Zeichens (1) nach unten zeigt und der entsprechende Blechstreifen höhenbeweglich an der Rückseite der Blechplatte (2) befestigt ist.

8. Kennzeichnungsschild wie unter Schutzanspruch 1 beschrieben,
**dadurch gekennzeichnet,**
**daß** die höhenbeweglichen Aufhängevorrichtungen (10) durch Federn (12) nach unten gezogen werden, sodaß jedes Zeichen (1) zwischen der oberen Aufhängekralle (11) und der unteren Aufhängekralle (11) eingespannt ist.

9. Kennzeichnungsschild wie unter Schutzanspruch 1 beschrieben,
**dadurch gekennzeichnet,**
**daß** die höhenbeweglichen Aufhängevorrichtungen (10) aus Blechstreifen bestehen, welche jeweils unten nach hinten abgekantet sind (13), sodaß die Entnahme der Zeichen (1) durch ein problemloses Hochschieben der jeweils unteren Aufhängevorrichtung (10) ermöglicht wird.

10. Kennzeichnungsschild wie unter Schutzanspruch 1
beschrieben,
**dadurch gekennzeichnet,**
**daß** die ausdekupierten Zeichen (1) an der Vorderseite zusätzlich ein-gleichgroßes Zeichen aus Kunststoff oder Metall (14) haben, welches dort dauerhaft befestigt ist.

11. Kennzeichnungsschild wie unter Schutzanspruch 1
beschrieben,
**dadurch gekennzeichnet,**
**daß** die ausdekupierten Zeichen (1) aus Edelstahl bestehen, welcher vorderseitig vom Herstellerwerk aus chemisch geschwärzt ist.

## Claims

1. A fireproof identification plate having interchangeable symbols, wherein the individual symbols (numerals, letters, special characters) are retained in detachable fashion within a rectangular plate made from highly heat-resistant material which is in turn solidly coupled in highly heat-resistant fashion perpendicular the corresponding mounting base (e.g. a vehicle),
**characterized in that**
cutout symbols (1) made from highly heat-resistant material are held at the front of the plate structure by means of a suspending device (10), that a plurality of reserve cutout symbols (1) can be retained within the interior of the plate structure, that a cover plate (3) is disposed at the front of the plate structure, and that the plate structure comprises a case (4) containing the plurality of reserve symbols (1), wherein the front of said case (4) is covered by a plate (2) beveled on all sides.

2. The identification plate as specified in claim 1,
**characterized in that**
each symbol (1) has an small upright-aligned rectangular opening (7) at its upper and lower end by means of which said symbol (1) can be suspended.

3. The identification plate as specified in claim 1,
**characterized in that**
cover plate (3) may, on the one hand, constitute an orange-colored background for the identification number and, on the other hand, may also be utilized as a neutral plate without an orange-colored surface upon said cover plate (3) being removed and then re-affixed with its backside facing forward, wherein said cover plate (3) is generally coupled to said plate (2) in highly heat-resistant fashion.

4. The identification plate as specified in claim 1,
**characterized in that**
beveled plate (2) is connected to case (4) via hinges (5) disposed at its left side and securable to said case (4) by means of two locking screws (6) disposed at its right side provided that case (4) itself is affixed to the mounting base such that the entire plate structure can be opened by means of hingeable plate (2).

5. The identification plate as specified in claim 1,
**characterized in that**
case (4) comprises punched locking clips (8) extending inwardly at right angles and being configured and arranged such that, on the one hand, they impede displacement of the suspended symbols (1), which form the identifying danger and substance numeral in the closed plate structure and, on the other hand, serve as retaining arms onto which symbols (1) of said plurality of reserve symbols (1) can be slipped.

6. The identification plate as specified in claim 1,
**characterized in that**
the face of beveled plate (2) is disposed with upright-aligned rectangular openings (9).

7. The identification plate as specified in claim 1,
**characterized in that**
suspending device (10) consists of metal strips having punched suspending claws (11) extending forwardly at right angles and leading outwardly through plate (2), wherein each symbol (1) is held at its upper end and at its lower end by means of said suspending claws (11) such that suspending claw (11) points upward at the upper end of symbol (1) and its respective metal strip is solidly connected to the rear side of plate (2) while suspending claw (11) at the lower end of symbol (1) points downward and its respective metal strip is affixed to the rear side of plate (2) so as to be flexible in its vertical height.

8. The identification plate as specified in claim 1,
**characterized in that**
height-flexible suspending device (10) is pulled downward by springs (12) such that each symbol (1) is clamped between upper suspending claw (11) and lower suspending claw (11).

9. The identification plate as specified in claim 1,
**characterized in that**
height-flexible suspending device (10) consists of metal strips (13), each being beveled underneath rearwardly such that the extraction of symbols (1) is enabled by means of an easy shifting upward of the respective lower suspending device (10).

10. The identification plate as specified in claim 1,
**characterized in that**
the face of cutout symbols (1) is provided with an additional symbol of equal size made of plastic or metal (14) durably affixed thereto.

11. The identification plate as specified in claim 1,
**characterized in that**
cutout symbols (1) are comprised of stainless steel, the faces of which have been chemically blackened at the manufacturing plant.

## Revendications

1. Plaque de signalisation ininflammable comportant des caractères échangeables, les différents caractères (chiffres, lettres, caractères spécifiques) étant maintenus de manière amovibles dans une plaque de tôle rectangulaire en matériau résistant aux températures élevées, qui est de son côté reliée fixement de manière permanente au support de montage correspondant (par ex. un véhicule),
**caractérisée en ce que**
sont utilisés des caractères découpés (1) en matériau résistant à des températures élevées, qui sont accrochés à l'avant à la construction de la plaque au moyen d'un dispositif d'accrochage (10), qu'une réserve de caractères découpés (1) peut être intégrée à l'intérieur de la construction de la plaque, qu'à l'avant de la construction de la plaque est prévue une plaque de recouvrement (3) et que la construction de la plaque consiste en un caisson en tôle (4) qui renferme la réserve de caractères (1), ce caisson en tôle (4) étant recouvert sur sa face frontale d'une plaque de tôle (2) chanfreinée de tous côtés.

2. Plaque de signalisation telle que décrite dans la revendication protectrice 1,
**caractérisée en ce que**
les caractères (1) comportent respectivement en haut et en bas de petites percées rectangulaires à format en hauteur (7) sur lesquelles les caractères (1) peuvent être accrochés.

3. Plaque de signalisation telle que décrite dans la revendication protectrice 1,
**caractérisée en ce que**
la plaque de recouvrement (3) constitue d'une part le fond de couleur orange du numéro d'identification et d'autre part peut être utilisée en tant que plaque neutre sans surface de couleur orange, en enlevant cette plaque de recouvrement (3) et en la raccrochant avec sa face arrière tournée vers l'avant, la plaque de recouvrement (3) étant généralement reliée à la plaque de tôle (2) de manière à résister aux températures élevées.

4. Plaque de signalisation telle que décrite dans la revendication protectrice 1,
**caractérisée en ce que**
la plaque de tôle chanfreinée (2) est reliée sur son côté gauche au caisson en tôle (4) par l'intermédiaire de charnières (5) et peut être bloquée sur son côté droit dans le caisson métallique (4) par deux vis de fermeture (6), sous réserve que le caisson en tôle (4) lui-même soit fixé sur le support de montage de telle sorte que l'ensemble de la construction de la plaque puisse être ouvert par la plaque de tôle rabattable(2).

5. Plaque de signalisation telle que décrite dans la revendication protectrice 1,
**caractérisée en ce que**
le caisson en tôle (4) comporte des brides de blocage estampées à angle droit vers l'intérieur (8), qui sont conçues et disposées de manière d'une part à empêcher les caractères accrochés (1), qui constituent le numéro de risque et de matière, de tomber en cas de construction fermée de la plaque et d'autre part servent de bras de retenue sur lesquels peuvent être glissés les caractères (1) de la réserve de caractères (1).

6. Plaque de signalisation telle que décrite dans la revendication protectrice 1,
**caractérisée en ce que**
la plaque de tôle chanfreinée (2) présente sur sa face frontale des percées rectangulaires à format en hauteur (9).

7. Plaque de signalisation telle que décrite selon la revendication protectrice 1,
**caractérisée en ce que**
les dispositifs d'accrochage (10) consistent en bandes de tôle qui comportent des crampons d'accrochage (11) estampés en angle droit vers l'avant, qui sont guidés vers l'extérieur à travers la plaque de tôle (2), chaque caractère (1) étant maintenu en haut et en bas par un crampon d'accrochage (11), de sorte que le crampon d'accrochage (11) est à l'extrémité supérieure du caractère (1) orienté vers le haut et que la bande de tôle correspondante est reliée fixement à l'arrière de la plaque de tôle (2), tandis que le crampon d'accrochage (11) est à l'extrémité inférieure du caractère (1) orient vers le bas et que la bande de tôle correspondante est fixée à l'arrière de la plaque de tôle (2) de manière mobile en hauteur.

8. Plaque de signalisation telle que décrite dans la revendication protectrice 1,
**caractérisée en ce que**
les dispositifs d'accrochage (10) mobiles en hauteur sont tirés vers le bas par des ressorts (12), de sorte que chaque caractère (1) est serré entre le crampon d'accrochage supérieur (11) et le crampon d'accrochage inférieur (11).

9. Plaque de signalisation telle que décrite dans la revendication protectrice 1,
**caractérisée en ce que**
les dispositifs d'accrochage mobiles en hauteur (10) consistent en bandes de tôle qui sont respectivement chanfreinées en bas vers l'arrière (13), de sorte qu'il est possible d'enlever les caractères (1) en poussant sans problème vers le haut le dispositif d'accrochage inférieur respectif (10).

10. Plaque de signalisation telle que décrite dans la revendication protectrice 1,
**caractérisée en ce que**
les caractères découpés (1) possèdent de plus sur leur face frontale un caractère de taille identique en matière plastique ou en métal (14) qui y est fixé en permanence.

11. Plaque de signalisation telle que décrite selon la revendication protectrice 1,
**caractérisée en ce que**
les caractères découpés (1) décrits ci-dessus sont composés d'acier inoxydable qui est également noirci chimiquement sur la face frontale à l'usine du fabricant.
